(19) **Europäisches Patentamt**
**European Patent Office**
**Office européen des brevets**

(11) **EP 2 605 043 B1**

(12) **EUROPEAN PATENT SPECIFICATION**

(45) Date of publication and mention
of the grant of the patent:
**23.07.2014 Bulletin 2014/30**

(51) Int Cl.:
***G01S 17/93*** *(2006.01)*   ***G01S 17/95*** *(2006.01)*
***G01S 7/497*** *(2006.01)*

(21) Application number: **11306682.3**

(22) Date of filing: **15.12.2011**

(54) **A self-cleaning light detection and ranging device**

Selbstreinigende Lichtdetektions- und Anordnungsvorrichtung

Détection de lumière autonettoyante et dispositif de télémétrie

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**19.06.2013 Bulletin 2013/25**

(73) Proprietor: **Upwind**
**75008 Paris (FR)**

(72) Inventors:
• **Sarry, Julien**
**92340 Bourg-la-Reine (FR)**

• **Davoust, Samuel**
**75015 Paris (FR)**
• **Ristorcelli, Jean Baptiste**
**92220 Bagneux (FR)**

(74) Representative: **Pontet Allano & Associes
Parc Les Algorithmes, Bâtiment Platon
CS 70003 Saint Aubin
91192 Gif sur Yvette Cedex (FR)**

(56) References cited:
**WO-A1-2007/012878      DE-A1- 10 332 939
GB-A- 1 032 936           US-A1- 2003 155 001
US-A1- 2006 152 705      US-A1- 2011 073 142**

Printed by Jouve, 75001 PARIS (FR)

# Description

## Technical field

The present invention relates to a light detection and ranging device comprising a main housing with a transparent window. The main housing encloses:

- means for emitting an emission laser beam and
- detection means for receiving a return laser beam,

both arranged for the emission laser beam and the return laser beam to pass through said transparent window.

Droplets of water or particles can deposit on the external side of said transparent window.

Said droplets can be caused by:

- rain,
- snow,
- a temperature difference between the inside and the outside of the light detection and ranging device, combined with humidity outside of said device,
- etc.

Said particles can comprise:

- dust,
- sheet,
- etc.

A light detection and ranging device (also known as LIDAR device or LADAR device) is an optical remote sensing device for measuring properties of a target by illuminating it with light, especially with a pulsed or continuous emission from a laser. A light detection and ranging device is used for instance for :

- measuring the speed of wind,
- measuring the speed of a hard target (such as a vehicle),
- measuring a quantity of dust particles in the atmosphere.

The technical field of the invention concerns in particular the field of a self-cleaning transparent window in a light detection and ranging device.

## Background of the invention

It is known in the prior art a light detection and ranging device comprising :

- a main housing with a transparent window;
- a wiper arranged for removing droplets of water or particles from the external side of said transparent window.

A drawback of such a solution is that the action of the oscillating wiper arms moving back and forth damages any coating deposited on the external side of said transparent window.

Another drawback of such a solution is that the action of the oscillating wiper arms moving back and forth damages any surface finish of the external side of said transparent window.

Another drawback of such a solution is that the contact surface of the wiper according to the prior art is covered with a rubber that creates deposits on the transparent window.

Patent GB 1,032,936 A describes an arrangement for protecting the window of an electro-optical apparatus against dust and dirt. The device comprises a casing enclosing a projector and a photo-electric device. The casing has a glass window on one side for allowing the passage of light from the projector. The device also comprises a shield member having an opening in front of the glass window, and a compressor arranged with the shield member for increasing the air pressure in front of the glass window.

Patent application US 2011/073142 A1 describes, on the embodiment of figures 19A and 19B, an on-board optical sensor comprising a camera enclosed in a casing, a washer nozzle, and an air spraying mechanism. The air spraying mechanism aims at preventing the water fluid sprayed onto the lens of the camera from remaining stuck.

An objective of the present invention is to propose a self-cleaning light detection and ranging device that does not have at least one of the aforementioned drawbacks.

## Description of the invention

At least one of the above-mentioned objectives is achieved with a light detection and ranging device comprising a main housing with a transparent window, the main housing enclosing:

- means for emitting at least one emission laser beam and
- detection means for receiving at least one return laser beam

both arranged for the emission laser beam and the return laser beam to pass through said transparent window.

The device according to the invention further comprises

- blowing means for blowing a gas stream towards
- a blow nozzle, said blow nozzle being arranged near the transparent window, for blowing said gas stream along the transparent window so that the gas stream escapes from the blow nozzle and generates a gas stream envelope on the transparent window directed along the transparent window.

Said blow nozzle according to the invention can consist in several blow nozzles.

The gas stream flows along the transparent window and pushes elements such as the droplets of waters deposited on the external side of the transparent window and thus removes them from the transparent window. The gas stream flowing along the transparent window can push elements such as droplets of water, dusts, particles, sheets, etc, in particular elements heavier than 10 grams. Said effect can be obtained for every position of the transparent window with respect to the horizontal direction.

The gas stream escaping from the blow nozzle generates a gas stream envelope that protects the transparent window from elements that could deposit on it. Said gas stream envelop can be defined by a difference of static pressure. Said gas stream envelop prevents said elements from contacting the transparent window. Said elements initially directed towards the transparent window are redirected by the gas stream envelope. The gas stream envelope forms a gas shield for maintaining the transparent window clear of elements that could otherwise deposit on it. Said elements can be for instances aerosols, snow flakes, particles of water forming fog, etc, in particular elements lighter than 10 grams

Consequently, the light detection and ranging device according to the invention forms a self-cleaning device.

As there is no mechanical element passing on the transparent window, any coating or surface finish of the external side of the transparent window is preserved.

As there is no mechanical contact between the transparent window and any other element of the light detection and ranging device there is no mark formed on the transparent window. In particular, any deposit of rubber on the transparent window is avoided.

Moreover, any fragile mechanical element such as a wiper arm is suppressed. Whereas in the device according to the prior art the wiper has to be replaced at least once a year, the device according to the invention can be used more than one year without any maintenance. This is particularly advantageous when the device according to the invention has to be installed in a remote or hardly accessible place.

As there is no mechanical element passing on the transparent window, there is no interference with the emission laser beam and the return laser beam.

According to the prior art, it is necessary to have a container of lubricant (such as water) for forming a protective layer between the contact surface of the wiper and the transparent window. According to the invention, said container is of no use. Therefore, the device according to the invention can be more compact. Moreover, the device according to the invention needs not any maintenance for the refill of said container.

Said blow nozzle, in particular its end blowing gas near the transparent window, is placed for instance between 0 mm and 10 cm away from the transparent window. For instance, said distance is 2 cm.

Said blow nozzle, in particular its end blowing gas near the transparent window, can be placed outside of the main housing.

The expression "a transparent window" should be understood as meaning "at least one transparent window". Advantageously, there can be one single transparent window which simplifies the manufacturing of the device according to the invention.

The expression "a transparent window" should be understood as meaning transparent at the wavelengths of the emission laser beam and the return laser beam.

The expression "along the transparent window" should be understood as "directed along a main axis or a plane that is inclined at a small angle $\Theta$ to said transparent window". $\Theta$ can be between 0° and 15°, in particular between 5° and 10° (1° referring to an angle $\dfrac{\pi}{180}$

Advantageously, said gas stream escaping from the blow nozzle is directed towards the transparent window.

The gas according to the invention can be air.

The blowing means can be located within the main housing.

In a variant embodiment of the invention, the blowing means can be located outside the main housing.

The light detection and ranging device according to the invention can comprise an opening in the main housing for the blowing means to pump air from the outside of the main housing and redirect it as gas stream into the blow nozzle.

In said embodiment, the blowing means are arranged for pumping air from the outside of the main housing, through said opening, and for redirecting it as gas stream into the blow nozzle

Therefore, it is not necessary to provide any source of gas.

Moreover, the air pumped from the outside of the main housing cools the inside of the main housing. Indeed, in operation, the temperature of components (in particular electronic components) inside the main housing can be higher than the temperature outside.

The transparent window according to the invention can be surrounded by guiding means receiving the blow nozzle and guiding said gas stream from the blow nozzle along the transparent window, said guiding means being arranged to form with the transparent window a cavity that is open to the outside.

Said guiding means are arranged with a curve for guiding the gas stream from the blow nozzle along the transparent window and then outside of said open cavity.

Said guiding means can precisely delimit the gas stream envelop according to the invention.

Said guiding means can guide said gas stream on the whole transparent window.

Advantageously, a duct is carrying said gas stream from the output of the blowing means towards the blow nozzle, said duct having a constant intern section.

Therefore, the power of the gas flow is maintained.

According to an advantageous embodiment, the light detection and ranging device according to the invention comprises an hydrophobic coating on the transparent window, on its outer surface opposite to the inside of the main housing.

Therefore, droplets of water can easily slip along the transparent window when there are pushed by the gas stream escaping from the blow nozzle.

Said coating can be preserved as previously explained, thanks to the self cleaning device according to the invention.

In a preferred embodiment of the invention, the output of the blow nozzle is as wide as the transparent window.

The output of the blow nozzle is its end blowing gas near the transparent window,

"As wide" has to be understood as "as wide plus or minus 10%".

In a particular variant according to the invention, the output of the blow nozzle is arranged for said gas stream to flow on discontinuous areas of the transparent window, each discontinuous areas comprising at least one area of said transparent window where said emission and return laser beams pass through.

It is possible to have a gas stream on discontinuous areas of the transparent window, using several blow nozzles or a suitable blow nozzle output.

For instance, each emission laser beam defines a line of sight, each line of sight corresponding to a discontinuous area of the transparent window according to said particular variant according to the invention.

The energy consumption of such a device according to the invention is minimized as only specific portions of the transparent window are protected by the gas stream according to the invention.

The blowing means according to the invention can be arranged to produce gas stream having a speed of at least 100 kph (kilometres per hour) at the output of the blow nozzle.

Said speed can in particular be between 100 kph and 200 kph, for instance 140 kph or 160 kph.

The blowing means according to the invention can be arranged for continuously blowing said gas stream along the transparent window.

Said continuous gas flow can continuously maintain a resistance to matter directed to the transparent window.

The light detection and ranging device according the invention can comprise a control circuit for controlling the blowing means, so as to adjust a gas flow of the blowing means depending on a measure of a parameter of the return laser beam.

In particular, the measured parameter can be an intensity of the return beam signal. If the transparent window is partially covered by elements such as particles or droplets of water, they interfere with the emission and the return laser beam. As the intensity of the return laser beam can be much lower than the intensity of the emission laser beam, the impact of said covering will be more important in proportion for the return laser beam intensity. Therefore, one can advantageously measure the covering by elements such as particles and droplets by using a measure of the return laser beam intensity.

Said control circuit can provide a feedback on the blowing means.

Said control circuit makes it possible to maintain the transparent window clear of elements regardless of:

- a wind speed that could throw matter (like sheets) towards the transparent window;
- climatic conditions (rain, snow, fog in particular);
- pollution conditions (rate of small particles in the atmosphere);
- etc.

The control circuit can be arranged for linearly adjusting said gas flow.

According to a variant, the control circuit can be arranged for adjusting said gas flow in increments.

The light detection and ranging device according to the invention can be advantageously used so as to redirect elements such as particles from the outside away from said transparent window.

The light detection and ranging device according to the invention can be advantageously used so as to blow away elements such as water droplets deposited on said transparent window.

**Description of the figures and embodiments**

Other advantages and characteristics of the invention will become apparent on examining the detailed description of an embodiment which is in no way limitative, and the attached drawings, in which:

- Figure 1 is a schematic view of a first embodiment of a light detection and ranging device according to the invention;
- Figures 2 is a schematic view of the technical effect obtained with the light detection and ranging device according to the invention;
- Figure 3 is schematic view of a duct in a second embodiment of a light detection and ranging device according to the invention;
- Figure 4A is a perspective view of a third embodiment of a light detection and ranging device according to the invention;
- Figure 4B is a sectional view of the third embodiment of a light detection and ranging device according to the invention; and
- Figure 5 is schematic view of a fourth embodiment of a light detection and ranging device according to the invention.

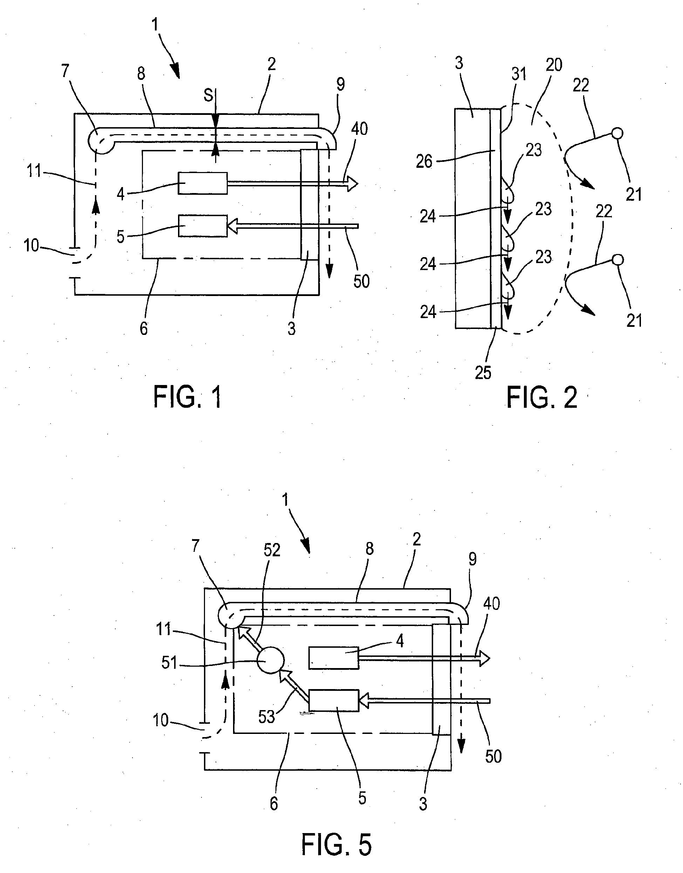

It will first be described with reference to Figure 1, a first embodiment of a light detection and ranging device 1 according to the invention. In the following, "light detection and ranging device" will be called "LIDAR device". Figure 1 corresponds to a schematic side view (and cross section) of a LIDAR device 1 according to the invention.

The LIDAR device 1 according to the invention is formed by a main housing 2 closed with a transparent window 3. The main housing 2 encloses:

- a laser source 4 forming means for emitting an emission laser beam 40;

- a receiver 5 forming detection means for receiving a return laser beam 50.

Both laser source 4 and receiver 5 are arranged for the emission laser beam 40 and the return laser beam 50 to pass through the transparent window 3 (that is why said window is called "transparent window", meaning that it is transparent in particular at the wavelengths of the emission laser beam 40 and the return laser beam 50).

In the represented embodiments of the invention, there is one single line of sight.

Although not represented, the LIDAR device 1 according to the invention could have several lines of sight.

According to the invention, as represented figure 1, laser source 4, receiver 5 and not represented processing means (for instance for processing data received by receiver 5) are in a closed housing 6. There are thereby protected from humidity, dusts, etc. Said closed housing 6 can be closed by said transparent window 3.

In a preferred embodiment of the invention, said closed housing 6 is waterproof, dustproof and gas-tight whereas said main housing 2 needs not be waterproof, dustproof and gas-tight.

According to the invention, blowing means 7 are located in the main housing 2. Said blowing means 7 can consist in at least one air blower. An air stream is carried out from the blowing means 7 into a duct 8. The air stream is carried out from duct 8 to a blow nozzle 9 whose output is arranged outside of the main housing 2.

Although not represented, the blowing means 7 could be directly connected to the blow nozzle 9, without any duct 8.

Although not represented, said blowing means could be located outside the main housing. Said feature could be combined with all the other features of the invention, in particular an opening in the main housing for the blowing means to pump air from the outside of the main housing and redirect it as air stream into the blow nozzle. Air can pass :

- from the outside into the main housing, then

- from the main housing to the blowing means.

Said blow nozzle 9 is located above the transparent window 3 and directs the air stream along the transparent window 3 so that the air escapes from the blow nozzle 9 and generates an air stream envelope on the transparent window, the air stream forming said envelope being directed along said transparent window 3.

In a preferred embodiment as represented figure 1, there is an opening 10 in the main housing 2. Air from outside of said main housing 2 is pumped and accelerated by said blowing means 7, then redirected into the duct.

It is represented figure 1 by dashed arrow 11, the path of air starting from outside of said main housing 2, arriving to the blow nozzle 9 and then escaping outside of said main housing 2.

Said preferred embodiment is advantageously combined with the feature according to which laser source 4, receiver 5 and not represented processing means are in a closed housing 6. Fragile components being protected by said closed housing 6, air from the outside can introduce into the main housing 2 without any risk of damages for the LIDAR device 1 according to the invention.

The inside of the main housing 2 can be heated :

- from the outside by the sun, and

- from the inside by electrical components forming said LIDAR device 1. Consequently, the air pumped from the outside is colder than air inside of said main housing 2. Therefore, said pumped air cools the inside of the main housing 2, in particular components inside said closed housing 6.

The position of the blowing means 7, as represented on figure 1, is not limitative. Nevertheless, blowing means 7 can advantageously be placed at the top in the main housing 2 whereas the opening 10 is placed at the bottom in the main housing 2. As hot air rises, cold air from the outside is heated within the main housing 2 and then rises towards the blowing means 7.

The terms "top" and "bottom" refer to the vertical direction on earth.

Figure 2 illustrates more particularly the effects and advantages of the blowing means 7 according to the invention.

The static pressure of the air stream escaping from said blow nozzle 9 is higher than the standard pressure outside of the main housing (around 101 kPa for the standard pressure). The difference between said static pressure and said standard pressure is between 3 and 6 kPa, for instance 4,9 kPa. Therefore, the air stream escaping from said blow nozzle 9 forms an air stream envelope 20. In other word, the difference of pressure between :

- the static pressure of the air stream escaping from said blow nozzle 9 and
- air outside of the main housing 2

forms a shield of air on said transparent window 3. Said air stream envelop protects said transparent window from particles 21 that could deposit on it. Said particles 21 initially directed towards the transparent window 3 are redirected by the air stream envelope 20. The paths of said particles 21 are represented figure 2 by arrows 22.

Moreover, the air stream (forming accelerated air) flows along the transparent window 3 and pushes elements such as droplets of waters 23 deposited on the external side 31 of the transparent window 3 and thus removes them from the transparent window 3. The paths of said droplets of waters 23 are represented on figure 2 by arrows 24. In a preferred embodiment of the invention, said blow nozzle 9 blows an air stream moving in a plane inclined at a small angle (less than 15°) to said transparent window 3. Said elements such as droplets of water 23 are pushed on said transparent window towards its end 25 opposite to said blow nozzle 9.

As represented on figure 2, there is a hydrophobic coating 26 deposited on said transparent window 3. Said hydrophobic coating 26 in combination with the blowing means 7 according to the invention facilitates the evacuation of said droplets of water 23 by said air stream directed along the transparent window 3. Said hydrophobic coating 26 is advantageously part of the invention, as according to the invention there is no contact between said coating and any mechanical element of the LIDAR device 1 passing on the transparent window. Other coatings such as antireflective coating can be deposited of said transparent window 2, in particular on its outer surface opposite to the inside of the main housing 2.

In a preferred embodiment of the invention, said transparent window 3 presents a high surface quality that can be maintained over time thanks to the invention, as according to the invention there is no contact between said transparent window 3 and any mechanical element of the LIDAR device 1 passing on the transparent window. The transparent window of a LIDAR device 1 presents for instance a surface finish of $\dfrac{\lambda}{X}$ where $\lambda$ is the wavelength of the emission laser beam 40 and X is an integer between 1 and 20.

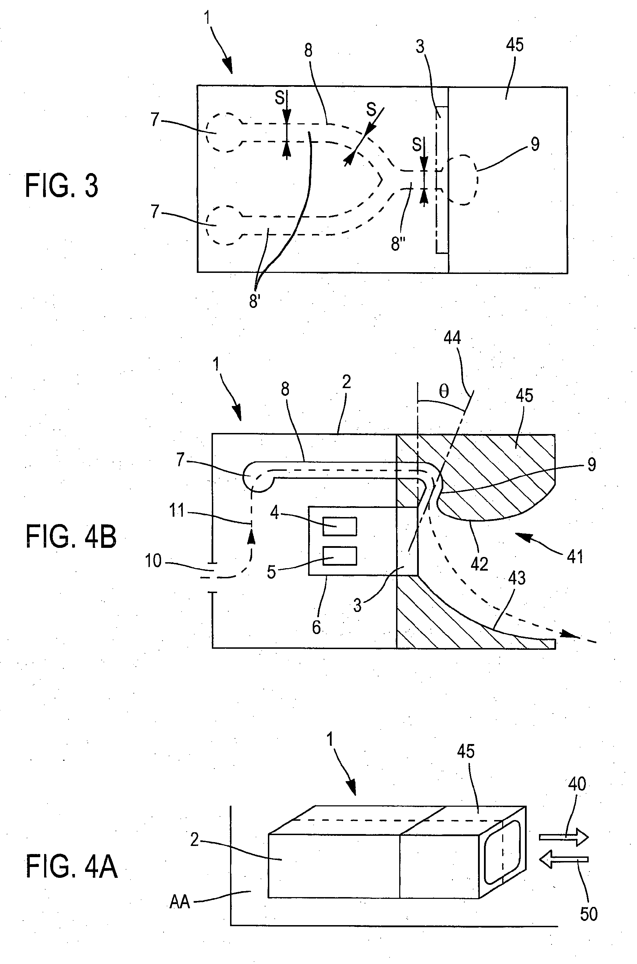

Figure 3 illustrates a schematic view of the duct 8 in a second embodiment of a LIDAR device 1 according to the invention. Figure 3 corresponds to a schematic top view of a LIDAR device 1 according to the invention.

According to figure 3, said blowing means are formed by two blowers 7, each arranged to produce a maximum airflow of 470 L/min for a circular intern section of the duct of around 800 mm² (diameter of the circle: 32 mm).

In a variant not represented, said blowing means are formed by one blower 7, arranged to produce a maximum airflow of 600 L/min for a circular intern section of the duct of 230 mm². More generally, said intern section can be between 100 mm² and 400 mm².

The section S of the duct 8 is constant (see also figure 1).

Said duct presents two branches 8', each branch 8' starting from a blower 7. Both branches 8' meet to form a single branch 8" upstream of the blow nozzle 9.

The section of the duct 8 is constant from each blower 7 to the blow nozzle 9, enabling to minimize any energy losses when transporting said air stream.

As also represented figure 3, said LIDAR device according to the invention is formed by two boxes: the main housing 2 and a box 45 comprising guiding means.

Said box 45 comprising guiding means is also represented on figures 4A and 4B.

Figure 4A is a perspective view of a LIDAR device 1 according to the invention. Figure 4B is a sectional view of said LIDAR device 1 as represented figure 4A, in a section along the plane AA.

Figure 4A will be described only for his differences with figure 1.

According to figure 4B, guiding means 41 are arranged around said transparent window 3 for guiding along said transparent window 3 air escaping from the blow nozzle 9. Said guiding means 41 are open to the outside, for said emission laser beam 40 and return laser beam 50 to circulate between said LIDAR device 1 and the atmosphere outside.

The form of the guiding means 41 is adapted for (the blow nozzle 9 being arranged upward):

- guiding air along said transparent window 3 with a cavity that is open to the outside and surrounding the transparent window 3;
- breaking the vortices that could form in the box 45, with an adapted convex curve 42 above the blow nozzle 9;
- guiding air towards the outside of said box 45 with a gentle slope 43 (concave curve) downward toward the outside.

The guiding means 41 control an air circulation in the box 45, on said transparent window 3.

As the air stream is guided towards the outside, it also prevents elements such as particles from getting inside said cavity and thus it also prevents particles from depositing on the transparent window.

Said blow nozzle 9 can be formed in continuity with the duct 8.

The blow nozzle 9 can be directed towards the transparent window 3.

The axe 44 of said blow nozzle 9 can be inclined at an angle $\Theta$ to the plane of the transparent window 3. Said angle $\Theta$ can be between 0° and 15°, advantageously 8° (1° referring to an angle $\dfrac{\pi}{180}$).

Said feature of the guiding means 41 and of the blow nozzle 9 can be independently implemented in a LIDAR device 1 according to the invention.

Advantageously, the temperature difference between the inside of the box 45 and the inside of the main housing 2 is maintained as small as possible. In particular, a reduced temperature difference can be obtained with an opening 10 in the main housing 2, as described above.

Figure 5 is schematic view of a fourth embodiment of a LIDAR device 1 according to the invention. Figure 5 will be described only for his differences with figure 1.

Said LIDAR device 1 according to figure 1 presents also a control circuit 51 controlling the blowing means 7 (see arrow 52). Thus, the airflow of the blowing means 7 can be adjusted so as to maintain the transparent window clear of elements such as particles and of droplets of water regardless of external conditions such as climatic conditions for instance.

Said control circuit 51 receives information from receiver 5 (see arrow 53), said information being representative from an amount of elements such as particles and/or droplets of water deposited on the transparent window 3. Said information is for instance a measure of said return laser beam intensity. As soon as said transparent window 3 starts being covered by elements such as particles and/or droplets of water, it changes the measure of said return laser beam intensity. Consequently, a signal is sent to said blowing means 7 for increasing in particular the airflow of said blowing means 7. Said signal creates a feedback for the blowing means 7. Parameters such as a speed of rotation in the blowing means can be adjusted. The speed of the gas stream at the output of the blow nozzle can thereby be adjusted. Said increased airflow removes elements such as droplets and/or particles that have accumulated on the transparent window 3, thereby maintaining over time a transparent window that is substantially continuously clear of elements such as droplets and/or particles.

In a preferred embodiment of the invention, the blowing means 7 continuously blow an air stream, in particular continuously and as long as said LIDAR device 1 is in operation.

Control circuit 51 is arranged for linearly adjusting the airflow of the blowing means 7.

According to a variant, control circuit 51 is arranged for adjusting in increments the airflow of the blowing means 7.

For instance, there can be one single threshold: the blowing means 7 are either on or off.

In a preferred embodiment, there are at least two (advantageously at least three) thresholds.

Of course, the invention is not limited to the examples which have just been described and numerous adjustments can be made to these examples without exceeding the scope of the invention.

For instance, although air is given as example, other gas such as nitrogen could be used.

In particular all the characteristics, forms, variants and embodiments described above are combined together in various combinations insofar they are not mutually exclusive and each other.

**Claims**

1.  A light detection and ranging device (1) comprising a main housing (2) with a transparent window (3), the main housing (2) enclosing:

    - means (4) for emitting at least one emission laser beam (40) and
    - detection means (5) for receiving at least one return laser beam (50)
    both arranged for the emission laser beam (40) and the return laser beam (50) to pass through said transparent window (3),
    - blowing means (7) for blowing a gas stream towards
    - a blow nozzle (9), said blow nozzle (9) being arranged near the transparent window (3), for blowing said gas stream along the transparent window (3) so that the gas stream escapes from the blow nozzle (9) and generates a gas stream envelope (20) on the transparent window (3) directed along the transparent window (3),

    an opening (10) in the main housing (2) being arranged for the blowing means (7) to pump air from the outside of the main housing (2) and redirect it as gas stream into the blow nozzle (9), so as to cool the inside of the main housing (2),
    the light detection and ranging device being **characterized in that** the means (4) for emitting at least one emission laser beam (40) and the detection means (5) are in a closed housing (6), which is itself in the main housing (2), the blowing means (7) being arranged to cool components inside the closed housing (6).

2.  A light detection and ranging device (1) according to claim 1, **characterized in that** the closed housing (6) further encloses processing means.

3.  A light detection and ranging device (1) according to claim 1 or 2, **characterized in that** the closed housing is waterproof, dustproof and gas-tight.

4.  A light detection and ranging device (1) according to one of the previous claims, **characterized in that** the transparent window (3) is surrounded by guiding means (41) receiving the blow nozzle (9) and guiding said gas stream from the blow nozzle (9) along the transparent window (3), said guiding means (41) being arranged to form with the transparent window (3) a cavity that is open to the outside.

5. A light detection and ranging device (1) according to one of the previous claims, **characterized by** a duct (8) carrying said gas stream from the output of the blowing means (7) towards the blow nozzle (9), said duct (8) having a constant intern section (S).

6. A light detection and ranging device (1) according to one of the previous claims, **characterized by** a hydrophobic coating (26) on the transparent window (3), on its outer surface opposite to the inside of the main housing (2).

7. A light detection and ranging device (1) according to one of the previous claims, **characterized in that** the output of the blow nozzle (9) is as wide as the transparent window (3).

8. A light detection and ranging device (1) according to to one of the previous claims, **characterized in that** the output of the blow nozzle is arranged for said gas stream to flow on discontinuous areas of the transparent window (3), each discontinuous areas comprising at least one area of said transparent window (3) where said emission and return laser beams (40, 50) pass through.

9. A light detection and ranging device (1) according to one of the previous claims, **characterized in that** the blowing means (7) are arranged to produce gas stream having a speed of at least 100 kilometres per hour (kph) at the output of the blow nozzle (9).

10. A light detection and ranging device (1) according to one of the previous claims, **characterized in that** the blowing means (7) are arranged for continuously blowing said gas stream along the transparent window (7).

11. A light detection and ranging device (1) according to one of the previous claims, **characterized by** a control circuit (51) for controlling the blowing means (7), so as to adjust a gas flow of the blowing means (7) depending on a measure of a parameter of the return laser beam (50).

12. A light detection and ranging device (1) according to claim 11, **characterized in that** the control circuit (51) is arranged for linearly adjusting said gas flow.

13. A light detection and ranging device (1) according to claim 11, **characterized in that** the control circuit (51) is arranged for adjusting said gas flow in increments.

14. Use of a light detection and ranging device (1) according to one of the previous claims, so as to redirect elements such as particles (21) from the outside away from said transparent window (3).

15. Use of a light detection and ranging device (1) according to one of the claims 1 to 13, so as to blow away elements such as water droplets (23) deposited on said transparent window (3).

## Patentansprüche

1. Lichtdetektions- und Anordnungsvorrichtung (1), umfassend ein Hauptgehäuse (2) mit einem transparenten Fenster (3), wobei das Hauptgehäuse (2) umschließt:

- Mittel (4) zum Aussenden wenigstens eines Aussende-Laserstrahls (40) und
- Detektionsmittel (5) zum Empfangen wenigstens eines reflektierten Laserstrahls (50) wobei beide so angeordnet sind, dass der Aussende-Laserstrahl (40) und der reflektierte Laserstrahl (50) das transparente Fenster (3) passieren,
- Blasmittel (7) zum Blasen eines Gasstroms in Richtung
- einer Blasdüse (9), wobei die Blasdüse (9) nahe dem transparenten Fenster (3) angeordnet ist, um den Gasstrom am transparenten Fenster (3) entlang zu blasen, so dass der Gasstrom aus der Blasdüse (9) entweicht und auf dem transparenten Fenster (3) eine Gasstromhülle (20) in Richtung entlang des transparenten Fensters (3) erzeugt,
eine Öffnung (10) in dem Hauptgehäuse (2), die so angeordnet ist, dass das Blasmittel (7) Luft von der Außenseite des Hauptgehäuses (2) pumpt und diese als Gasstrom in die Blasdüse (9) umleitet, um so die Innenseite des Hauptgehäuses (2) zu kühlen,
wobei die Lichtdetektions- und Anordnungsvorrichtung **dadurch gekennzeichnet ist, dass** das Mittel (4) zum Aussenden wenigstens eines Aussende-Laserstrahls (40) und das Detektionsmittel (5) sich in einem geschlossenen Gehäuse (6) befinden, das wiederum in dem Hauptgehäuse (2) angeordnet ist, wobei das Blasmittel (7) so angeordnet ist, dass es Komponenten innerhalb des geschlossenen Gehäuses (6) kühlt.

2. Lichtdetektions- und Anordnungsvorrichtung (1) gemäß Anspruch 1, **dadurch gekennzeichnet, dass** das geschlossene Gehäuse (6) ferner Verarbeitungsmittel umschließt.

3. Lichtdetektions- und Anordnungsvorrichtung (1) gemäß Anspruch 1 oder 2, **dadurch gekennzeichnet,**

**dass** das geschlossene Gehäuse wasserdicht, staubdicht und gasdicht ist.

4. Lichtdetektions- und Anordnungsvorrichtung (1) gemäß einem der vorhergehenden Ansprüche, **dadurch gekennzeichnet, dass** das transparente Fenster (3) von Führungsmitteln (41) umgeben ist, welche die Blasdüse (9) aufnehmen und den Gasstrom von der Blasdüse (9) weg am transparenten Fenster (3) entlang führen, wobei das Führungsmittel (41) so angeordnet ist, dass es mit dem transparenten Fenster (3) einen nach außen offenen Hohlraum bildet.

5. Lichtdetektions- und Anordnungsvorrichtung (1) gemäß einem der vorhergehenden Ansprüche, **gekennzeichnet durch** einen Kanal (8), der den Gasstrom von dem Ausgang des Blasmittels (7) in Richtung zur Blasdüse (9) transportiert, wobei der Kanal (8) einen konstanten Innenabschnitt (S) aufweist.

6. Lichtdetektions- und Anordnungsvorrichtung (1) gemäß einem der vorhergehenden Ansprüche, **gekennzeichnet durch** eine hydrophobe Beschichtung (26) auf dem transparenten Fenster (3), auf der Außenfläche gegenüber der Innenseite des Hauptgehäuses (2).

7. Lichtdetektions- und Anordnungsvorrichtung (1) gemäß einem der vorhergehenden Ansprüche, **dadurch gekennzeichnet, dass** der Ausgang der Blasdüse (9) so breit wie das transparente Fenster (3) ist.

8. Lichtdetektions- und Anordnungsvorrichtung (1) gemäß einem der vorhergehenden Ansprüche, **dadurch gekennzeichnet, dass** der Ausgang der Blasdüse so angeordnet ist, dass der Gasstrom auf unterbrochenen Flächen des transparenten Fensters (3) strömt, wobei jede unterbrochene Fläche jeweils wenigstens eine Fläche des transparenten Fensters (3) umfasst, welche der Aussende- und der reflektierte Laserstrahl (40, 50) passieren.

9. Lichtdetektions- und Anordnungsvorrichtung (1) gemäß einem der vorhergehenden Ansprüche, **dadurch gekennzeichnet, dass** die Blasmittel (7) so angeordnet sind, dass sie einen Gasstrom mit einer Geschwindigkeit von wenigstens 100 Kilometern pro Stunde (km/h) am Ausgang der Blasdüse (9) erzeugen.

10. Lichtdetektions- und Anordnungsvorrichtung (1) gemäß einem der vorhergehenden Ansprüche, **dadurch gekennzeichnet, dass** die Blasmittel (7) so angeordnet sind, dass sie den Gasstrom kontinuierlich am transparenten Fenster (7) entlang blasen.

11. Lichtdetektions- und Anordnungsvorrichtung (1) gemäß einem der vorhergehenden Ansprüche, **gekennzeichnet durch** einen Steuerkreis (51) zum Steuern der Blasmittel (7), um so den Gasfluss des Blasmittels (7) einzustellen, je nach der Größe eines Parameters des reflektierten Laserstrahls (50).

12. Lichtdetektions- und Anordnungsvorrichtung (1) gemäß Anspruch 11, **dadurch gekennzeichnet, dass** der Steuerkreis (51) so angeordnet ist, dass er den Gasfluss linear einstellt.

13. Lichtdetektions- und Anordnungsvorrichtung (1) gemäß Anspruch 11, **dadurch gekennzeichnet, dass** der Steuerkreis (51) so angeordnet ist, dass er den Gasfluss schrittweise einstellt.

14. Verwendung einer Lichtdetektions- und Anordnungsvorrichtung (1) gemäß einem der vorhergehenden Ansprüche, um Objekte wie z.B. Partikel (21) von der Außenseite von dem transparenten Fenster (3) weg umzuleiten.

15. Verwendung einer Lichtdetektions- und Anordnungsvorrichtung (1) gemäß einem der Ansprüche 1 bis 13, um Objekte wie Niederschlag von Wassertropfen (23) auf dem transparenten Fenster (3) wegzublasen.

**Revendications**

1. Dispositif de détection et localisation par la lumière (1) comprenant un boîtier principal (2) avec une vitre transparente (3), le boîtier principal (2) intégrant :

   - des moyens (4) pour émettre au moins un faisceau laser d'émission (40) et
   - des moyens de détection (5) pour recevoir au moins un faisceau laser de retour (50)
   ces moyens étant agencés de manière à ce que le faisceau laser d'émission (40) et le faisceau laser de retour (50) passent au travers de ladite vitre transparente (3),
   - des moyens de soufflage (7) pour souffler un flux de gaz vers
   - une buse de soufflage (9), ladite buse de soufflage (9) étant agencée à proximité de la vitre transparente (3), afin de souffler ledit flux de gaz le long de la vitre transparente (3), de sorte que le flux de gaz s'échappe de la buse de soufflage (9) et génère une enveloppe de flux de gaz (20) sur la vitre transparente (3), l'enveloppe de flux de gaz étant dirigée le long de la vitre transparente (3),
   une ouverture (10) dans le boîtier principal (2) étant agencée de sorte que les moyens de soufflage (7) pompent de l'air depuis l'extérieur du boîtier principal (2) et le redirigent en tant que flux de gaz à l'intérieur de la buse de soufflage (9), afin de refroidir l'intérieur du boîtier principal (2),

le dispositif de détection et localisation par la lumière étant **caractérisé en ce que** les moyens (4) pour émettre au moins un faisceau laser d'émission (40) et les moyens de détection (5) sont dans un boîtier fermé (6), lui-même contenu dans le boîtier principal (2), les moyens de soufflage (7) étant agencés pour refroidir les composants à l'intérieur du boîtier fermé (6).

2. Dispositif de détection et localisation par la lumière (1) selon la revendication 1, **caractérisé en ce que** le boîtier fermé (6) intègre de plus des moyens de traitement.

3. Dispositif de détection et localisation par la lumière (1) selon la revendication 1 ou 2, **caractérisé en ce que** le boîtier fermé est étanche à l'eau, aux poussières, et aux gaz.

4. Dispositif de détection et localisation par la lumière (1) selon l'une des revendications précédentes, **caractérisé en ce que** la vitre transparente (3) est entourée par des moyens de guidage (41) recevant la buse de soufflage (9) et guidant ledit flux de gaz de la buse de soufflage (9) le long de la vitre transparente (3), lesdits moyens de guidage (41) étant agencés pour former, avec la vitre transparente (3), une cavité ouverte vers l'extérieur.

5. Dispositif de détection et localisation par la lumière (1) selon l'une des revendications précédentes, **caractérisé par** un conduit (8) transportant ledit flux de gaz depuis la sortie des moyens de soufflage (7) vers la buse de soufflage (9), ledit conduit (8) présentant une section interne constante (S).

6. Dispositif de détection et localisation par la lumière (1) selon l'une des revendications précédentes, **caractérisé par** un revêtement hydrophobique (26) sur la vitre transparente (3), sur sa surface extérieure, opposée par rapport à l'intérieur du boîtier principal (2).

7. Dispositif de détection et localisation par la lumière (1) selon l'une des revendications précédentes, **caractérisé en ce que** la sortie de la buse de soufflage (9) est aussi large que la vitre transparente (3).

8. Dispositif de détection et localisation par la lumière (1) selon l'une des revendications précédentes, **caractérisé en ce que** la sortie de la buse de soufflage est agencée de sorte que ledit flux de gaz s'écoule sur des zones discontinues de la vitre transparente (3), chaque zone discontinue comprenant au moins une zone de ladite vitre transparente (3) à travers laquelle passent les faisceaux laser d'émission et de retour (40, 50).

9. Dispositif de détection et localisation par la lumière (1) selon l'une des revendications précédentes, **caractérisé en ce que** les moyens de soufflage (7) sont agencés pour générer un flux de gaz ayant une vitesse d'au moins 100 kilomètres par heure (km/h) à la sortie de la buse de soufflage (9).

10. Dispositif de détection et localisation par la lumière (1) selon l'une des revendications précédentes, **caractérisé en ce que** les moyens de soufflage (7) sont agencés pour souffler en continu ledit flux de gaz le long de la vitre transparente (3).

11. Dispositif de détection et localisation par la lumière (1) selon l'une des revendications précédentes, **caractérisé par** un circuit de commande (51) pour commander les moyens de soufflage (7), afin d'ajuster un flux de gaz des moyens de soufflage (7) en fonction d'une mesure d'un paramètre du faisceau laser de retour (50).

12. Dispositif de détection et localisation par la lumière (1) selon la revendication 11, **caractérisé en ce que** le circuit de commande (51) est agencé pour ajuster linéairement ledit flux de gaz.

13. Dispositif de détection et localisation par la lumière (1) selon la revendication 11, **caractérisé en ce que** le circuit de commande (51) est agencé pour ajuster ledit flux de gaz par incréments.

14. Utilisation d'un dispositif de détection et localisation par la lumière (1) selon l'une des revendications précédentes, afin de rediriger des éléments, tels que des particules (21) de l'extérieur, à distance de ladite vitre transparente (3).

15. Utilisation d'un dispositif de détection et localisation par la lumière (1) selon l'une des revendications 1 à 13, afin de chasser des éléments tels que des gouttes d'eau (23) déposées sur ladite vitre transparente (3).

FIG. 1

FIG. 2

FIG. 5

FIG. 3

FIG. 4B

FIG. 4A

**EP 2 605 043 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 1032936 A
- US 2011073142 A1